# EUROPÄISCHE PATENTSCHRIFT

(11) **EP 2 897 263 B1**
(45) Veröffentlichungstag und Bekanntmachung des Hinweises auf die Patenterteilung: **28.11.2018**
(21) Anmeldenummer: 15020005.3
(22) Anmeldetag: 17.01.2015
(51) Int. Cl.: H02K 11/00

(54) **Elektromotor mit Drehpositionsgeber**
Electric motor with rotary position sensor
Moteur électrique avec capteur de position rotative

(30) Priorität: 17.01.2014 DE 102014100540
(43) Veröffentlichungstag der Anmeldung: 22.07.2015
(73) Patentinhaber: Trinamic Motion Control GmbH & Co. KG, 22769 Hamburg (DE)
(72) Erfinder: Randt, Michael, 20144 Hamburg (DE)
(74) Vertreter: Heun, Thomas

(56) Entgegenhaltungen:
- DE-A1-102005 040 647
- DE-A1-102011 002 007
- DE-A1-102011 056 396
- Anonym: "Stepper Motor: Unipolar/Bipolar, 200 Steps/Rev, 42×48mm, 4V, 1.2 A/Phase", Pololu.com - Catalog , 17. November 2013 (2013-11-17), XP002756328, Gefunden im Internet: URL:https://web.archive.org/web/2013111705 2910/http://www.pololu.com/product/1200 [gefunden am 2016-04-12]
- Anonym: "Drehmomentaufnehmer", Wikipedia, Die freie Enzyklopädie , 14. Juni 2013 (2013-06-14), XP002756329, Gefunden im Internet: URL:https://web.archive.org/web/2013061417 5902/http://de.wikipedia.org/wiki/Drehmome ntaufnehmer [gefunden am 2016-04-12]

## Beschreibung

Die Erfindung betrifft einen elektrischen Motor, insbesondere einen Schrittmotor, mit einer Vorrichtung zur Bestimmung der Lage bzw. Drehstellung von dessen Rotor oder Motorwelle, mittels eines an dem Motor angeordneten und durch die Drehung des Rotors oder der Motorwelle beaufschlagten Drehgebers sowie eines Sensors zur Erfassung von durch den Drehgeber erzeugten Drehsignalen.

Wenn elektrische Motoren wie insbesondere Schrittmotoren nicht nur als reine Antriebsmotoren sondern als Stellmotoren betrieben werden, benötigt man stets eine genaue Information über die momentane Drehstellung des Rotors, um den Motor in einem geschlossenen Regelkreis so ansteuern zu können, dass der Rotor eine gewünschte Drehstellung mit hoher Präzision erreicht.

Für solche Anwendungen werden aus bekannten Gründen Schrittmotoren bevorzugt eingesetzt, da mit diesen eine Umdrehung des Rotors in eine große Anzahl von Einzelschritten aufgelöst werden kann. Entsprechend dieser Anzahl von Einzelschritten wird also eine Informationen über die momentane Drehstellung des Rotors mit einer entsprechend hohen Genauigkeit bzw. Auflösung benötigt. Bei einem Schrittmotor mit z.B. 200 Vollschritten (Standard-2-Phasen Hybridschrittmotor) ist üblicherweise eine Auflösung der Drehstellung von mehr als zwölf Bit wünschenswert.

Es ist bekannt, zur Ermittlung der momentanen Drehstellung eines Rotors optische oder magnetische Encoder ("off-center"-Encoder) zu verwenden, die oftmals mit einer eigenen Lagerung für eine Maßverkörperung versehen sind. Insbesondere für mechatronische Anwendungen ist dies jedoch nachteilig, da diese Encoder als separates Bauelement positioniert werden müssen und dabei relativ viel Platz benötigen, zudem sehr genau justiert werden müssen und nicht unerhebliche Kosten verursachen.

Ein ähnliches Problem besteht im Zusammenhang mit den in jüngster Zeit entwickelten hochauflösenden, monolithischen, magnetischen Sensor-ICs, deren Wirkungsweise auf dem Halleffekt basiert und mit denen das Feld eines als Drehgeber auf der Achse des betreffenden Motors montierten Knopfmagneten (drahtlos) erfasst und ausgewertet werden kann.
Da die meisten Schrittmotoren an ihrem rückseitigen Deckel oder Lagerschild jedoch nicht über eine hinreichend präzise Positionsreferenz in Relation zu der Drehstellung der Motorwelle verfügen, muss eine dort am Motor befestigte Träger- oder Leiterplatte, auf der ein solcher Sensor-IC montiert ist, aufwändig eingemessen, d.h. sehr genau gegenüber dem Magneten bzw. der Motorachse positioniert bzw. ausgerichtet und fixiert werden, um anhand der Sensorsignale die Kommutierungs-Algorithmen mit der erforderlichen Genauigkeit erzeugen zu können.

Das Dokument DE102005040647 offenbart ein Gerät gemäß dem Oberbegriff des Anspruchs 1. Eine allgemeine Aufgabe, die der Erfindung zugrunde liegt, besteht deshalb darin, nach einer Möglichkeit zu suchen, mit der bei relativ geringem konstruktiven Aufwand die Drehstellung des Rotors (oder der Motorwelle) eines elektrischen Motors mit hoher Auflösung bzw. Genauigkeit drahtlos erfasst werden kann.
Insbesondere soll mit der Erfindung ein elektrischer Motor, insbesondere ein Schrittmotor geschaffen werden, der eine Vorrichtung zur genauen Bestimmung der Lage bzw. Drehstellung von dessen Rotor (oder Motorwelle) gegenüber einer Referenzposition aufweist.
Gelöst wird diese Aufgabe mit einer Vorrichtung gemäß Anspruch 1.
Ein besonderer Vorteil dieser Lösung besteht darin, dass sie relativ einfach und kostengünstig realisiert werden kann.
Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:

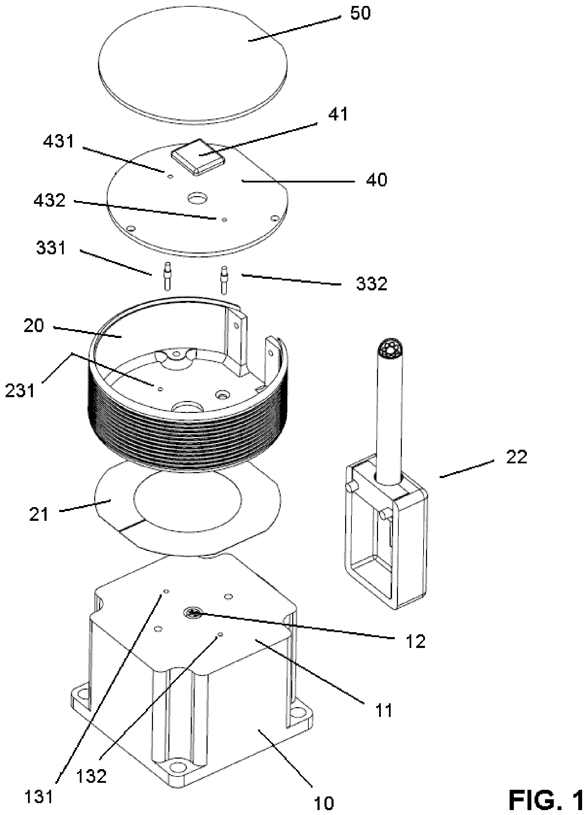

- Fig. 1: schematisch einen elektrischen Motor sowie eine Explosionsdarstellung wesentlicher Teile einer Ausführungsform einer erfindungsgemäßen Vorrichtung.

Figur 1 zeigt schematisch das Gehäuse 10 eines elektrischen Motors, und zwar in einer Ansicht schräg auf dessen rückseitiges Lagerschild 11. An diesem Lagerschild befindet sich das rückseitige Ende einer Motorwelle, an der ein Drehgeber 12 vorzugsweise in Form eines Magneten befestigt ist, der sich mit der Motorwelle dreht und auf diese Weise Drehsignale in Form eines sich drehenden Magnetfeldes erzeugt. Dieser Magnet kann zum Beispiel ein an der Stirnseite der Motorwelle befestigter Knopfmagnet 12 sein. Der Magnet kann sich innerhalb des Motorgehäuses 10 befinden und dann von dem Lagerschild 11 verdeckt sein oder, wie in Figur 1 dargestellt, frei in einer entsprechenden Öffnung des Lagerschildes 11 liegen.

Weiterhin befindet sich an dem Motor bzw. dem Motorgehäuse, vorzugsweise in dem (rückseitigen) Lagerschild 11 mindestens eine erste und eine zweite Referenzbohrung 131, 132, die in der (x/y-) Ebene, d.h. senkrecht zur Motorwelle (z-Richtung), zur Definition einer Referenzposition sowohl in gegenüber der Motorwelle radialer Richtung als auch in Drehrichtung der Motorwelle für einen zur Erfassung des magnetischen Feldes des Drehgeber-Magneten 12 vorgesehenen Sensor bzw. Sensor-IC 41 (siehe unten) dienen.

Diese (mindestens zwei) Referenzbohrungen 131, 132 werden vorzugsweise schon während der Herstellung des Motors eingebracht. Sie können aber auch noch nach Fertigstellung des Motors eingebracht werden, da das Lagerschild 11 zu diesem Zweck nicht unbedingt entfernt zu werden braucht. Die Referenzbohrungen 131, 132 können mit relativ geringem fertigungstechnischen Aufwand mit hoher Präzision in Bezug auf die Motorwelle und deren Lagersitz und damit auch in Bezug auf den Drehgeber-Magneten 12 angeordnet werden.

Figur 1 zeigt weiterhin ein übliches Gehäuse 20, in dem sich eine Trägerplatte oder Schaltungsplatine 40 (Leiterplatte) befindet, auf der ein magnetischer Sensor (bzw. Sensor-IC wie eingangs erläutert) 41 montiert ist und auf die ggf. elektronische Schaltungen (nicht dargestellt) zum Beispiel zur Verarbeitung von Sensorsignalen oder zur Ansteuerung des Motors aufgebracht sein können. Eine schematisch angedeutete Kabelverbindung 22 dient zum Beispiel zur Übertragung von Sensor- oder Steuersignalen, zur Spannungsversorgung der Schaltungen oder zu anderen Zwecken. Das Gehäuse 20 wird üblicherweise über einen Zwischenring 21 an dem Lagerschild 11 zum Beispiel mittels Schrauben (nicht dargestellt) befestigt.

Figur 1 zeigt ferner einen ersten und einen zweiten Trägerstift (Gewinde- oder Passstift) 331, 332, die jeweils mit ihrem ersten Ende in der ersten bzw. zweiten Referenzbohrung 131, 132 in dem Lagerschild 11 fixiert werden. Dies kann durch Einschrauben, Einlöten, Einkleben oder durch Einsetzen mit Presspassung usw. realisiert werden. In dem Boden des Gehäuses 20 befindet sich eine entsprechende erste Bohrung 231 und eine zweite Bohrung (nicht dargestellt), durch die sich der erste bzw. der zweite Trägerstift 331, 332 in zusammengebautem Zustand jeweils hindurch erstreckt.

Ferner ist in die in dem Gehäuse 20 befindliche Schaltungsplatine 40 eine dritte und eine vierte Referenzbohrung 431, 432 eingebracht, in der in zusammengebautem Zustand jeweils das zweite Ende des ersten bzw. des zweiten Trägerstiftes 331, 332 wie oben erläutert fixiert wird.

Wie oben bereits erwähnt wurde, befindet sich auf der Schaltungsplatine 40 der Sensor 41 (oder Sensor-IC), der zur Erfassung des von dem auf der Motorwelle befestigten Drehgeber-Magneten 12 (hier Knopfmagnet) erzeugten magnetischen Feldes dient.

Der Magnetfeld-Sensor 41 kann zum Beispiel ein bekannter Hallsensor sein und ist vorzugsweise zur Oberflächenmontage (SMT - Surface Mounted Technology), insbesondere durch Auflöten, vorgesehen. Solche Sensoren können insbesondere in Form der eingangs genannten monolithischen magnetischen Sensor-ICs realisiert sein. Die Begriffe "Sensor" und "Sensor-IC" können deshalb austauschbar verwendet werden.

Der Sensor 41 ist vorzugsweise auf der dem Drehgeber-Magneten 12 zugewandten Unterseite der Schaltungsplatine 40 montiert, um das magnetische Feld des Magneten 12 besser erfassen zu können. In der Darstellung der Figur 1 befindet sich der Sensor 41 nur aus Gründen der Darstellung auf der Oberseite der Schaltungsplatine 40.

Das Gehäuse 20 wird schließlich mit einem Deckel 50 geschlossen.

Mit dieser Vorrichtung ist es möglich, den Sensor 41 mit sehr hoher Genauigkeit gegenüber dem Drehgeber-Magneten 12 (und damit gegenüber der Motorwelle) zu positionieren, ohne dass eine mechanische Justage der Schaltungsplatine 40 oder des Gehäuses 20 erforderlich ist. Dies beruht zum einen darauf, dass die Positionierung der Schaltungsplatine 40 mittels des ersten und zweiten Trägerstiftes 331, 332 sowie der ersten bis vierten Referenzbohrung 131, 132, 431, 432, in die die Trägerstifte jeweils eingesetzt werden, mit hoher Genauigkeit in Bezug auf die Motorwelle und deren Lagersitz und damit auch in Bezug auf den Drehgeber-Magneten 12 (siehe oben) festgelegt ist.

Zum anderen können die dritte und die vierte Referenzbohrung 431, 432 sowie die Befestigungspunkte für den Sensor 41 relativ zueinander mit relativ geringem fertigungstechnischen Aufwand mit hoher Präzision auf der Schaltungsplatine 40 angeordnet werden, so dass dadurch auch der Sensor (bzw. Sensor-IC) 41 (der gegenüber der dritten und vierten Referenzbohrung ausgerichtet wird) entsprechend präzise gegenüber dem Drehgeber-Magneten 12 positioniert ist.

Dies gilt insbesondere dann, wenn die Befestigungspunkte Lötflächen sind und der Sensor 41 ein SMT-Bauelement darstellt, da in diesem Fall der Sensor 41 während des Lötvorgangs auf dem geschmolzenen Lot aufschwimmt und sich somit auf den Lötflächen selbst zentriert.

Damit ist also die Präzision der Positionierung des Sensors 41 relativ zu dem Drehgeber-Magneten 12 im Wesentlichen nur davon abhängig, mit welcher Genauigkeit die erste und die zweite Referenzbohrung 131, 132 in das Lagerschild 11 eingebracht wird, sowie von der Genauigkeit, mit der der Sensor 41 in Relation zu der dritten und der vierten Referenzbohrung 431, 432 positioniert wird.

Diese beiden Vorgänge können jedoch ohne großen Aufwand, d.h. bei relativ geringen Kosten, mit hoher Präzision ausgeführt werden, so dass auch eine aufwändige Nachjustage nicht mehr erforderlich ist.

Die tatsächliche Position des Sensors 41 auf der Schaltungsplatine 40 wird dabei so gewählt, dass er das von dem Drehgeber-Magneten 12 erzeugte Magnetfeld zur Erfassung von dessen Drehbewegungen zuverlässig erfassen kann. Eine solche Position kann sich genau in axialer Verlängerung der Motorachse oder in einer dazu senkrechten Ebene versetzt (wie in Figur 1 gezeigt) auf der Schaltungsplatine 40 befinden.

Die Vorteile dieser Lösung zeigen sich insbesondere bei der Realisierung von mechatronischen Baueinheiten mit insbesondere hochpoligen Schrittmotoren, bei denen der Sensor 41 zusätzlich auf einer an dem Motor ohnehin zu befestigenden Schaltungsplatine angeordnet werden kann.

Das erfindungsgemäße Positionierungsprinzip ist grundsätzlich auch bei Einsatz eines optischen oder anderen Drehgebers und eines entsprechenden optischen oder anderen Sensors anwendbar.

## Patentansprüche

1. Elektrischer Motor mit einer Vorrichtung zur Bestimmung der Lage oder Drehstellung von dessen Rotor oder Motorwelle, mit einem an dem Motor angeordneten und durch die Drehung des Rotors oder der Motorwelle beaufschlagten Drehgeber (12), sowie einem Sensor (41), der zur drahtlosen Erfassung von durch den Drehgeber (12) durch die Drehung erzeugten Drehsignalen in Relation zu dem Drehgeber (12) ausgerichtet und an einer Trägerplatte (40) befestigt ist, **dadurch gekennzeichnet, dass**
- der Motor oder ein Gehäuse (10) des Motors eine erste und eine zweite Referenzbohrung (131, 132) und die Trägerplatte (40) eine dritte und eine vierte Referenzbohrung (431, 432) aufweist,
- die Trägerplatte (40) mittels eines ersten Trägerstiftes (331), der mit einem Ende in der ersten Referenzbohrung (131) und mit dem anderen Ende in der dritten Referenzbohrung (431) fixiert ist, sowie mittels eines zweiten Trägerstiftes (331), der mit einem Ende in der zweiten Referenzbohrung (132) und mit dem anderen Ende in der vierten Referenzbohrung (432) fixiert ist, an dem Motor befestigt ist, so dass
- der Sensor (41) dadurch in Relation zu dem Drehgeber (12) ausgerichtet ist, dass die erste und die zweite Referenzbohrung (131, 132) in Relation zu dem Drehgeber (12) oder der Motorwelle und die dritte und die vierte Referenzbohrung (431, 432) in Relation zu dem Sensor (41) ausgerichtet ist.

2. Elektrische Motor nach Anspruch 1,
bei dem die erste und die zweite Referenzbohrung (131, 132) in ein auf einer Rückseite des Motors vorhandenes Lagerschild (11) eingebracht ist.

3. Elektrischer Motor nach Anspruch 1,
bei dem der Drehgeber (12) ein optischer oder magnetischer Drehgeber und der Sensor (41) ein optischer bzw. magnetischer Sensor ist.

4. Elektrischer Motor nach Anspruch 1,
bei dem der Drehgeber (12) an der Motorwelle befestigt ist.

5. Elektrischer Motor nach Anspruch 1,
bei dem der Drehgeber (12) ein an einer Stirnseite der Motorwelle befestigter Knopfmagnet ist.

6. Elektrischer Motor nach Anspruch 1,
bei dem der Sensor (41) durch Auflöten auf an der Trägerplatte (40) in Relation zu der dritten und der vierten Referenzbohrung (431, 432) ausgerichteten Lötflächen montiert wird.

7. Elektrischer Motor nach Anspruch 6,
bei dem der Sensor (41) ein Sensor-IC und insbesondere ein SMT-Bauelement ist.

8. Elektrischer Motor nach Anspruch 6,
bei dem die Trägerplatte (40) eine Schaltungsplatine oder Leiterplatte ist, auf die elektronische Schaltungen zur Ansteuerung des Motors aufgebracht sind.

9. Elektrischer Motor nach Anspruch 1,
bei dem der Motor ein Schrittmotor ist.

10. Elektrischer Motor nach Anspruch 1,
bei dem der Motor und die Vorrichtung zur Bestimmung der Lage oder Drehstellung des Rotors oder der Motorwelle eine mechatronische Baueinheit bilden.

## Claims

1. Electric motor comprising a device for determining the position or rotational position of its rotor or motor shaft, with a rotary encoder (12) arranged on the motor and acted on by the rotation of the rotor or the motor shaft, and a sensor (41) which is aligned in relation to the rotary encoder (12) for the wireless detection of rotational signals generated by the rotary encoder (12) by the rotation and is fastened to a carrier plate (40), **characterized in that**
- the motor or a housing (10) of the motor has a first and a second reference bore (131, 132) and the carrier plate (40) has a third and a fourth reference bore (431, 432),
- the carrier plate (40) is fixed to the motor by a first support pin (331) fixed at one end in the first reference bore (131) and at the other end in the third reference bore (431), and by a second support pin (332) fixed at one end in the second reference bore (132) and at the other end in the fourth reference bore (432), so that
- the sensor (41) is aligned with respect to the rotary encoder (12) **in that** the first and second reference bores (131, 132) are aligned with respect to the rotary encoder (12) or motor shaft and the third and fourth reference bores (431, 432) are aligned with respect to the sensor (41).

2. Electric motor according to claim 1,
in which the first and second reference bores (131, 132) are inserted into a end shield (11) which is provided on a back side of the motor.

3. Electric motor according to claim 1,
in which the rotary encoder (12) is an optical or magnetic rotary encoder and the sensor (41) is an optical or magnetic sensor.

4. Electric motor according to claim 1,
in which the rotary encoder (12) is fastened to the motor shaft.

5. Electric motor according to claim 1,
in which the rotary encoder (12) is a button magnet fixed to one end face of the motor shaft.

6. Electric motor according to claim 1,
in which the sensor (41) is mounted by soldering on soldering surfaces aligned on the carrier plate (40) in relation to the third and fourth reference bores (431, 432).

7. Electric motor according to claim 6,
in which the sensor (41) is a sensor IC and in particular an SMT component.

8. Electric motor according to claim 6,
in which the carrier plate (40) is a circuit board or printed circuit board to which electronic circuits for controlling the motor are applied.

9. Electric motor according to claim 1,
in which the motor is a stepper motor.

10. Electric motor according to claim 1,
in which the motor and the device for determining the position or rotational position of the rotor or motor shaft form a mechatronic unit.

## Revendications

1. Moteur électrique avec un dispositif pour déterminer la position ou la position de rotation de son rotor ou de son arbre moteur, avec un codeur rotatif (12) disposé sur le moteur et sollicité par la rotation du rotor ou de l'arbre moteur, et un capteur (41) qui est aligné par rapport au codeur rotatif (12) pour la détection sans fil de signaux de rotation générés par le codeur rotatif (12) par la rotation et qui est fixé à une plaque support (40), **caractérisé en ce que**
- le moteur ou un carter (10) du moteur a un premier et un deuxième alésage de référence (131, 132) et la plaque de support (40) a un troisième et un quatrième alésage de référence (431, 432),
- la plaque de support (40) est fixée au moteur par une première broche de support (331) fixée à une extrémité dans le premier alésage de référence (131) et à l'autre extrémité dans le troisième alésage de référence (431), et par une deuxième broche de support (332) fixée à une extrémité dans le deuxième alésage de référence (132) et à l'autre extrémité dans le quatrième alésage de référence (432), de sorte que
- le capteur (41) est aligné par rapport au codeur rotatif (12) **en ce que** les premier et deuxième alésages de référence (131, 132) sont alignés par rapport au codeur rotatif (12) ou à l'arbre moteur et les troisième et quatrième alésages de référence (431, 432) sont alignés par rapport au capteur (41).

2. Moteur électrique selon la revendication 1,
dans laquelle les premier et deuxième alésages de référence (131, 132) sont insérés dans un flasque d'extrémité (11) qui est prévu sur un côté arrière du moteur.

3. Moteur électrique selon la revendication 1,
dans laquelle le codeur rotatif (12) est un codeur optique ou magnétique et le capteur (41) est un capteur optique ou magnétique.

4. Moteur électrique selon la revendication 1,
dans laquelle le capteur rotatif (12) est fixé à l'arbre du moteur.

5. Moteur électrique selon la revendication 1,
dans laquelle le codeur rotatif (12) est un aimant de bouton fixé à une face frontale de l'arbre moteur.

6. Moteur électrique selon la revendication 1,
dans laquelle le capteur (41) est monté par brasage sur des surfaces de brasage alignées sur la plaque de support (40) par rapport aux troisième et quatrième alésages de référence (431, 432).

7. Moteur électrique selon la revendication 6,
dans laquelle le capteur (41) est un circuit intégré de capteur et en particulier un composant SMT.

8. Moteur électrique selon la revendication 6,
dans laquelle la plaque de support (40) est une carte de circuit imprimé ou une carte de circuit imprimé sur laquelle sont appliqués des circuits électroniques pour commander le moteur.

9. Moteur électrique selon la revendication 1,
dans laquelle le moteur est un moteur pas à pas.

10. Moteur électrique selon la revendication 1,
dans laquelle le moteur et le dispositif de détermination de la position ou de la position de rotation du rotor ou de l'arbre moteur forment une unité mécatronique.
